# EUROPEAN PATENT APPLICATION

(11) **EP 4 446 444 A1**
(43) Date of publication of application: **16.10.2024**
(21) Application number: 22904141.3
(22) Date of filing: 01.12.2022
(51) Int. Cl.: C22B 3/06, C22B 3/44, C22B 7/00, C22B 15/00, C22B 23/00, H01M 10/54

(54) **TREATMENT METHOD FOR ALLOY**

(30) Priority: 06.12.2021 JP 2021197733; 06.12.2021 JP 2021197734; 25.11.2022 JP 2022188423
(71) Applicant: SUMITOMO METAL MINING CO., LTD., Tokyo 105-8716 (JP)
(72) Inventor: TAKENOUCHI, Hiroshi, Niihama-shi, Ehime 792-0002 (JP); SHOUJI, Hirofumi, Niihama-shi, Ehime 792-0002 (JP); MATSUOKA, Itsumi, Niihama-shi, Ehime 792-0002 (JP); SANJO, Shota, Niihama-shi, Ehime 792-0002 (JP); MATSUGI, Takumi, Niihama-shi, Ehime 792-0002 (JP); ASANO, Satoshi, Niihama-shi, Ehime 792-0002 (JP); HEGURI, Shin-ichi, Niihama-shi, Ehime 792-0002 (JP)
(74) Representative: Jones, Nicholas Andrew
(86) International application number: PCT/JP2022/044424
(87) International publication number: WO 2023/106210

(57) **Abstract**

The present invention provides a method for efficiently obtaining a solution that contains nickel and/or cobalt from lithium ion battery waste or the like, which is an alloy that contains nickel and/or cobalt and copper. The present invention is a treatment method for an alloy, the method being used for the purpose of obtaining a solution that contains nickel and/or cobalt from an alloy that contains nickel and/or cobalt and copper. This treatment method for an alloy comprises a leaching step in which the alloy is subjected to a leaching treatment by adding an acid solution to the alloy in the coexistence of a sulfurizing agent, thereby obtaining a leachate and a leaching residue; and in the leaching step, the leaching treatment is carried out while maintaining the copper concentration in the reaction solution within the range of 0.5 g/L to 15 g/L by adding a divalent copper ion source thereto. Moreover, in the leaching step, the leaching treatment is carried out while maintaining the redox potential of the reaction solution at 50 mV or more, using a silver/silver chloride electrode as a reference electrode.

## Description

### TECHNICAL FIELD

The present invention relates to an alloy treatment method for obtaining a solution containing nickel and/or cobalt from an alloy containing nickel and/or cobalt and copper.

### BACKGROUND ART

A lithium ion battery (hereinafter, also referred to as "LIB") characterized in light weight and high output is mounted on a vehicle such as an electric vehicle or a hybrid vehicle and an electronic device such as a mobile phone, a smartphone, or a personal computer.

The LIB has a structure in which a negative electrode material in which a negative electrode active material such as graphite is fixed to a surface using a copper foil as a negative electrode current collector and a positive electrode material in which a positive electrode active material such as lithium nickelate or lithium cobaltate is fixed to a positive electrode current collector made of an aluminum foil are charged into an outer can made of a metal such as aluminum or iron or a plastic such as vinyl chloride, together with a separator made of a porous resin film of polypropylene or the like, and impregnated with an organic solvent containing an electrolyte such as lithium hexafluorophosphate (LiPF₆) as an electrolytic solution.

In the case of use by being incorporated in a vehicle, an electronic device, or the like as described above, the LIB eventually cannot be used due to deterioration of the automatic vehicle, the electronic device, or the like or the service life of the LIB itself, and becomes a discarded lithium ion battery (discarded LIB). The "discarded LIB" includes those generated as a defective product in the manufacturing process.

The discarded LIB contains valuable components such as nickel, cobalt, and copper, and in order to effectively utilize resources, it is desirable to recover and reuse the valuable components.

In general, a pyrometallurgical treatment using a principle of pyrometallurgical smelting in which a device, a member, or a material made of a metal is put into a furnace or the like, melted at a high temperature, and separated into metal containing valuables and slag other than metal has been widely performed, in order to efficiently recover valuable components from the device, the member, or the material. For example, Patent Document 1 discloses a method of recovering valuable metals using a pyrometallurgical treatment. By applying the method disclosed in Patent Document 1 to recovery of valuable metals from a discarded LIB, a copper alloy containing nickel and cobalt can be obtained.

Such a pyrometallurgical treatment (hereinafter also referred to as a "pyrometallurgical process") has a disadvantage that energy is required for heating to a high temperature using a furnace, but has an advantage that various impurities can be separated in a batch manner. Furthermore, the slag obtained by the pyrometallurgical treatment also has advantages of chemically stable properties and being easy to dispose of with little concern for environmental impact.

However, when the discarded LIB is treated by the pyrometallurgical treatment, there is a problem that a part of the valuable components, particularly, most of cobalt is distributed to the slag, which inevitably causes a recovery loss of cobalt. In addition, the metal obtained by the pyrometallurgical treatment is an alloy in which valuable components coexist, and in order to reuse the metal, purification for separating each component from the alloy and removing impurities is necessary.

As an element separation method generally used in the pyrometallurgical treatment, for example, a method of separating copper and lead or separating lead and zinc by slowly cooling from a molten state at high temperature is known. However, when copper and nickel are main components as the discarded LIB, since copper and nickel have a property of uniformly melting in an entire composition range, copper and nickel are merely mixed and solidified into a layer shape even when slowly cooled, and cannot be separated.

Further, there is also a purification method in which nickel is subjected to a disproportionation reaction using carbon monoxide (CO) gas to volatilize and separate nickel from copper or cobalt, but since toxic CO gas is used, there is a problem that it is difficult to ensure the safety.

In addition, there is a method of roughly separating a mixed mat (sulfide) as a method of separating copper and nickel which has been industrially performed. In this method, a mat containing copper and nickel is produced in a smelting step, and is slowly cooled in the same manner as described above, thereby separating the mat into a sulfide containing a large amount of copper and a sulfide containing a large amount of nickel. In this separation method, separation of copper and nickel is limited to rough separation, and in order to obtain high-purity nickel and copper, a separate treatment such as electrolytic refining is required.

In addition, a method of using a vapor pressure difference by way of chlorides has also been studied. However, since it is a process in which a large amount of toxic chlorine is handled, corrosion measures, safety measures, and the like of the device are required in a large scale, and it is difficult to say that the method is industrially suitable.

In this manner, the separation and purification of each element in the pyrometallurgical treatment has a disadvantage that the separation and purification remains at a rough separation level or the cost increases.

On the other hand, a hydrometallurgical treatment (hereinafter, also referred to as a "hydrometallurgical process") using a method of hydrometallurgical smelting using an acid treatment, a neutralization treatment, a solvent extraction treatment, or the like has an advantage that energy consumption is small and mixed valuable components can be separated individually and recovered with high purity grade.

However, when the discarded LIB is treated using the hydrometallurgical treatment, a hexafluorophosphate anion or the like of an electrolytic solution component contained in the discarded LIB is a hardly treated product that cannot be completely decomposed even by high temperature and high-concentration sulfuric acid, and is mixed into an acid solution in which a valuable component is leached. The hexafluorophosphate anion has significant environmental restrictions such as the difficulty in recovery of phosphorus and fluorine from an aqueous solution after recovery of valuables because the hexafluorophosphate anion is a watersoluble ester carbonate, and the necessity of various measures in order to suppress release to a public sea area or the like.

Furthermore, it is not easy to obtain a solution that can be used for purification by efficiently leaching valuable components from a discarded LIB only with an acid. In particular, a discarded LIB body is difficult to leach with an acid or the like, and it is not easy to completely leach valuable components. In addition, in a case where an acid having a strong oxidizing power is used to strongly perform leaching, there are problems that impurity components such as aluminum, iron, and manganese, which are not industrially recovered together with valuable components, are leached, the cost of a neutralizing agent for treating impurities by neutralization or the like increases, and the amount of generated drainage and the amount of precipitate increase. Further, electric charge may remain in the discarded LIB, in a case where the discarded LIB is treated as it is, heat generation, explosion, or the like may occur, and therefore, it takes time and effort for a treatment for discharging the remaining electric charge.

The treatment on the discarded LIB using only the hydrometallurgical treatment in this manner is not always an advantageous method.

Therefore, attempts have been made to separate a discarded LIB, which is difficult to be treated independently by the above-described pyrometallurgical treatment or hydrometallurgical treatment, into valuable components and other components by a method in which the pyrometallurgical treatment and the hydrometallurgical treatment are combined, that is, impurities are removed as much as possible by the pyrometallurgical treatment such as roasting the discarded LIB to obtain a uniform discarded LIB treated product, and the obtained treated product is separated into valuable components and other components by the hydrometallurgical treatment.

In such a method in which the pyrometallurgical treatment and the hydrometallurgical treatment are combined, fluorine and phosphorus in an electrolytic solution are volatilized and removed by the pyrometallurgical treatment, and members made of organic substances such as plastics and separators which are structural components of the discarded LIB are also decomposed by heat. In addition, the discarded LIB treated product obtained through the pyrometallurgical treatment has uniform properties, and thus can be easily handled as a uniform material even in the hydrometallurgical treatment.

However, the problem of recovery loss where cobalt contained in the discarded LIB is distributed to slag still remains by simply combining the pyrometallurgical treatment and the hydrometallurgical treatment.

For example, there is a method in which by adjusting treatment conditions in the pyrometallurgical treatment, cobalt is efficiently distributed not to slag but to metal, and reduction melting is performed to reduce the distribution to slag. However, the metal obtained by such a method becomes a copper-based corrosion-resistant alloy containing nickel and cobalt. Even when valuable components are to be separated and recovered from the corrosion-resistant alloy by the hydrometallurgical treatment, acid dissolution is difficult and the recovery cannot be effectively performed.

When chlorine gas is used for leaching the corrosion-resistant alloy, for example, the obtained solution (leachate) contains high-concentration copper and relatively-low-concentration nickel and cobalt. Among them, nickel and cobalt can be easily separated using a known method such as solvent extraction, but it is difficult to easily separate copper from nickel and cobalt at low cost.

As described above, it is difficult to efficiently separate copper and nickel and/or cobalt from an alloy derived from a discarded LIB or the like containing various components in addition to copper, nickel, and cobalt as valuable components.

The above-described problem also exists when nickel and/or cobalt and copper are separated from a discarded battery other than the discarded LIB, and also exists when nickel and/or cobalt and copper are separated from an alloy derived from a battery other than a discarded battery.

### Citation List

### Patent Document

Patent Document 1: Japanese Unexamined Patent Application, Publication No. 2012-172169
Patent Document 2: Japanese Unexamined Patent Application, Publication No. S63-259033

### DISCLOSURE OF THE INVENTION

### Problems to be Solved by the Invention

The present invention has been proposed in view of such circumstances, and an object thereof is to provide a method for efficiently obtaining a solution containing nickel and/or cobalt from an alloy containing nickel and/or cobalt and copper of a discarded lithium ion battery or the like.

### Means for Solving the Problems

As a result of intensive studies, the present inventors have found that the above-described problems can be solved by adding a divalent copper ion source and performing a leaching treatment while maintaining a copper concentration in a predetermined range in a treatment method including a leaching step of leaching an alloy with an acid, and have completed the present invention.

(1) A first invention of the present invention is an alloy treatment method for obtaining a solution containing nickel and/or cobalt from an alloy containing nickel and/or cobalt and copper, the method including a leaching step of adding an acid solution to the alloy and performing a leaching treatment in a state where a sulfurizing agent coexists, thereby obtaining a leachate and a leached residue, in which in the leaching step, a divalent copper ion source is added and the leaching treatment is performed while maintaining a copper concentration in a reaction solution in a range of 0.5 g/L or more and 15 g/L or less.
(2) A second invention of the present invention is the alloy treatment method according to the first invention, in which in the leaching step, the leaching treatment is performed while maintaining the reaction solution at an oxidation-reduction potential of 50 mV or more in terms of a value using a silver/silver chloride electrode as a reference electrode.
(3) A third invention of the present invention is the alloy treatment method according to the second invention, in which the oxidation-reduction potential is 50 mV or more by controlling addition of the sulfurizing agent.
(4) A fourth invention of the present invention is the alloy treatment method according to any of the first invention to the third invention, the method further including: a cementation step of adding a reducing agent and a sulfurizing agent to the leachate obtained in the leaching step, and performing a decopperization treatment of sulfurizing at least copper contained in the leachate to obtain a post-decopperization solution and a decopperization residue.
(5) A fifth invention of the present invention is the alloy treatment method according to any of the first invention to the fourth invention, in which a part of the leachate obtained in the leaching step is fed back to the leaching step as the acid solution.
(6) A sixth invention of the present invention is the alloy treatment method according to the fourth invention, in which copper contained in the decopperization residue obtained in the cementation step is added as the divalent copper ion source to be added in the leaching step.
(7) A seventh invention of the present invention is the alloy treatment method according to any of the first invention to the sixth invention, in which the alloy includes an alloy obtained by melting a discarded lithium ion battery.

### Effects of the Invention

According to the present invention, it is possible to efficiently obtain a solution containing nickel and/or cobalt from an alloy containing nickel and/or cobalt and copper of a discarded lithium ion battery or the like.

### BRIEF DESCRIPTION OF THE DRAWINGS

FIG. 1 is a process chart showing an example of a flow of an alloy treatment method;
FIG. 2 is a graph showing transition of ORP of a reaction solution with respect to a reaction time of a leaching reaction in Example 2; and
FIG. 3 is a graph showing transition of ORP of a reaction solution with respect to a reaction time of a leaching reaction in Reference Example 1.

### PREFERRED MODE FOR CARRYING OUT THE INVENTION

Hereinafter, specific embodiments of the present invention (hereinafter referred to as "the present embodiment") will be described in detail. The present invention is not limited to the following embodiments, and various modifications may be made within the scope of the object of the present invention. In the present description, an expression "X to Y" (X and Y are any numerical values) means "X or more and Y or less".

An alloy treatment method according to the present embodiment is a method of obtaining a solution containing nickel and/or cobalt from an alloy containing nickel and/or cobalt and copper.

As the alloy containing nickel and/or cobalt and copper, which is to be treated, for example, discarded materials due to deterioration of an automatic vehicle, an electronic device, or the like, scrap of a lithium ion battery occurred accompanying with the service life of the lithium ion battery, or a discarded battery such as a defective product in a battery manufacturing process can be used. In addition, an alloy obtained by subjecting such a discarded battery or the like to a pyrometallurgical treatment and performing heating and fusing (melting) to reduce the discarded battery or the like can be used.

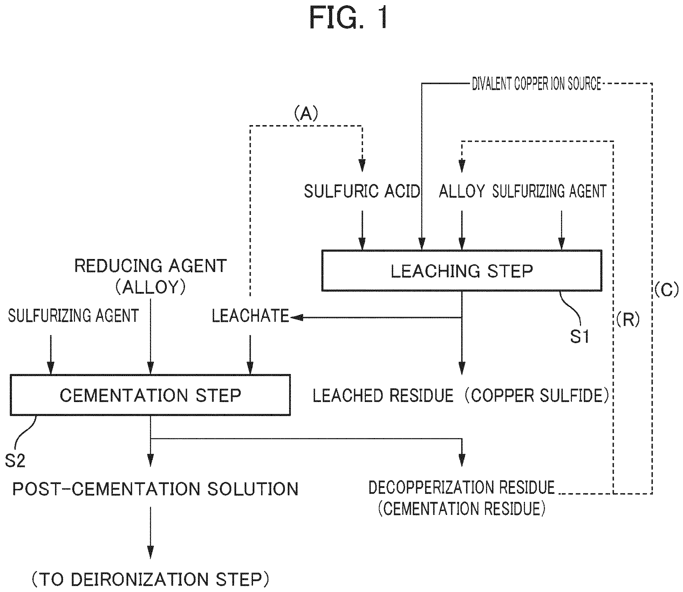

FIG. 1 is a process chart showing an example of a flow of the alloy treatment method according to the present embodiment. The method includes a leaching step S1 of adding an acid solution to an alloy containing nickel and/or cobalt and copper (hereinafter, also simply referred to as "alloy") and performing a leaching treatment in a state where a sulfurizing agent coexists, thereby obtaining a leachate and a leached residue. The method further includes a cementation step S2 of adding a reducing agent and a sulfurizing agent to the obtained leachate, and performing a decopperization treatment of sulfurizing at least copper contained in the leachate to obtain a post-decopperization solution and a decopperization residue.

In the method according to the present embodiment, in the leaching step S1, a divalent copper ion source is added and the leaching treatment is performed while maintaining a copper concentration in a reaction solution in a range of 0.5 g/L or more and 15 g/L or less.

It is preferable that in the leaching step S1, a divalent copper ion source is added, and the leaching treatment is performed while maintaining the reaction solution at an oxidation-reduction potential (reference electrode: silver/silver chloride electrode) of 50 mV or more.

### [Leaching Step]

### (Regarding Leaching Treatment)

In the leaching step S1, an object to be leached is subjected to a leaching treatment with an acid to obtain a leachate. At this time, a sulfurizing agent is added before bringing the alloy into contact with the acid or at the same time as bringing the alloy into contact with the acid, and the leaching treatment is performed under a condition that the sulfurizing agent coexists. In this manner, by performing the leaching treatment with an acid in the presence of a sulfurizing agent, a leachate in which nickel and/or cobalt is dissolved and a leached residue mainly containing copper sulfide are obtained.

The "object to be leached" to be subjected to the leaching treatment is an alloy containing nickel and/or cobalt and copper as materials for treatment. In addition to this, the decopperization residue obtained through the decopperization treatment in the cementation step S2 may be contained and treated together, as will be described in detail later. In this case, the object to be leached in the first treatment is the alloy containing nickel and/or cobalt and copper.

More specifically, in the leaching treatment, an acid solution is added to and brought into contact with the object to be leached in a state where a sulfurizing agent coexists, thereby causing reactions represented by the following reaction formulae [1] and [2]. In the following reaction formulae, sulfuric acid is used as the acid, and elemental sulfur is used as the sulfurizing agent. Cu-Ni + S° ⇒ CuS + NiO [1]

NiO + H₂SO₄ + 1/2O₂ ⇒ NiSO₄ + H₂O [2]

In the leaching treatment, a sulfuric acid solution (leachate) of nickel and/or cobalt and a leached residue mainly composed of copper sulfide are generated, as shown in the above reaction formulae. In this manner, copper leached from an alloy can be precipitated as copper sulfide and separated as the leached residue by subjecting the alloy to the leaching treatment with an acid in a state where a sulfurizing agent coexists. The generated leached residue can be discharged to the outside of the system, for example, as a material for copper smelting.

On the other hand, by subjecting the alloy to the leaching treatment with an acid, nickel and/or cobalt is leached, and the leachate containing nickel and/or cobalt can be obtained.

### (Regarding Addition of Divalent Copper Ion)

Here, in the method according to the present embodiment, a divalent copper ion source is added, and the leaching treatment is performed while maintaining the copper concentration in the reaction solution in a predetermined range. In this manner, in the leaching reaction in which nickel and/or cobalt contained in the alloy is leached with an acid, the leaching of nickel and cobalt can be promoted by adding divalent copper ions to be present.

This is presumed to be because divalent copper ions act as a catalyst in the leaching reaction as shown in the following formulae [3] and [4].

2Cu⁺ + 1/2O₂ + 2H⁺ ⇒ 2Cu²⁺ + H₂O [3]

2Cu²⁺ + Ni ⇒ 2Cu⁺ + Ni²⁺ [4]

The divalent copper ion source is not particularly limited, and copper sulfate, copper oxide, or the like can be used. A method of adding the divalent copper ion source is not particularly limited, and for example, the divalent copper ion source can be added to the alloy to be treated together with the acid solution. Alternatively, the divalent copper ion source may be added to the acid solution in advance, and the acid solution containing copper may be added to the alloy.

In addition, as the divalent copper ion source, copper contained in the decopperization residue obtained through the cementation step S2 to be described later, that is, copper sulfide (CuS) obtained by the decopperization treatment of sulfurizing copper remaining in the leachate may be recovered and used (dashed arrow (C) in FIG. 1). In this case, the progress of sulfurization may be controlled by, for example, controlling an addition amount of the sulfurizing agent such that a part of copper contained in the alloy to be treated remains in the leachate, instead of completely precipitating copper as copper sulfide.

In addition, the divalent copper ion source is added and the leaching treatment is performed while maintaining the copper concentration in the reaction solution (leachate) in the range of 0.5 g/L or more and 15 g/L or less. The leaching treatment is performed while maintaining the copper concentration in a range of preferably 1 g/L or more and 12 g/L or less, and more preferably 3 g/L or more and 10 g/L or less. When the copper concentration in the reaction solution is less than 0.5 g/L, the effect of added copper as a catalyst is not sufficiently exhibited, the added copper is completely sulfurized to form a precipitate, and the effect of promoting the leaching of nickel and cobalt cannot be obtained. In addition, when copper is present at a high copper concentration of more than 15 g/L, the effect of promoting the leaching does not change much, but copper remaining in the leachate after the leaching treatment increases, and the load of the decopperization treatment in the cementation step S2, which is the next step, increases.

In addition, a part of the leachate obtained by such a leaching treatment may be repeatedly used as the acid solution used for the leaching reaction (dashed arrow (A) in FIG. 1). As described above, the divalent copper ion source is added to act as a catalyst for the leaching reaction in the leaching treatment. Therefore, divalent copper may remain in the leachate obtained through the leaching treatment. In addition, the leachate is an acid solution obtained by leaching nickel or cobalt with an acid such as sulfuric acid. Therefore, by repeatedly using a part of the obtained leachate as an acid solution to be added to the leaching treatment, copper remaining in the leachate can be used as a divalent copper ion source, and the amount of copper to be newly added can be reduced.

### (Regarding Control on Oxidation-Reduction Potential after Addition of Divalent Copper Ion)

In the method according to the present embodiment, divalent copper ions are added and the leaching treatment is performed as described above, but at this time, the leaching treatment is preferably performed while controlling and maintaining the reaction solution at an oxidation-reduction potential (ORP) of 50 mV or more in terms of a value using the silver/silver chloride electrode as a reference electrode.

An object of the alloy treatment method is to selectively leach nickel and/or cobalt, thereby efficiently obtaining a solution separated from copper. Therefore, more than necessary copper contained in the reaction solution needs to be precipitated as copper sulfide and separated from nickel and cobalt. In order to generate copper sulfide, the leaching reaction is performed in a state where a sulfurizing agent such as sulfur is added and coexists as described above, but when the amount of the sulfurizing agent is insufficient, copper cannot be precipitated and separated, and on the other hand, when the sulfurizing agent is excessively present, the added copper (divalent copper ion) is completely sulfurized, and the effect of promoting the leaching of nickel and cobalt is not sufficiently exhibited.

Therefore, it is preferable that the leaching treatment is performed while controlling and maintaining the ORP of the reaction solution in a specific range. Accordingly, copper is prevented from excessively remaining in the obtained leachate while exhibiting, at the maximum limit, the effect of promoting the leaching by the added divalent copper ions, thereby obtaining a solution selectively containing nickel and/or cobalt.

Specifically, the leaching treatment is performed while maintaining the ORP (reference electrode: silver/silver chloride electrode) of the reaction solution at 50 mV or more. In addition, it is more preferable that the leaching treatment is performed while maintaining the ORP at 100 mV or more. In a case where the ORP is reduced to less than 50 mV in the leaching treatment, the reaction between the added divalent copper ion and the sulfurizing agent such as sulfur (the following reaction formula [5]) proceeds, the copper ion is fixed as copper sulfide, and there is a possibility that the effect of promoting the leaching cannot be sufficiently obtained.

2Cu²⁺ + S ⇒ 2CuS [5]

A method of controlling the ORP is not particularly limited, but the ORP may be controlled by controlling addition of the sulfurizing agent to be added together with the acid solution in the leaching treatment. The control on addition of the sulfurizing agent includes not only control on the addition amount but also control on an addition timing of a predetermined amount of the sulfurizing agent. For example, the control may be performed by adding a predetermined amount of the sulfurizing agent in a stepwise manner (divisionally adding the predetermined amount) instead of adding the predetermined amount of the sulfurizing agent in a batch manner. In this manner, by controlling the ORP by controlling the addition of the sulfurizing agent, occurrence of excessive sulfurizing reaction can be directly suppressed, and the effect of promoting the leaching can be more effectively exhibited.

The method of controlling the ORP may be a method of adding an oxidant such as oxygen, air, hydrogen peroxide, or ozone gas. For example, when a gaseous oxidant is used as the oxidant, the ORP of the leachate obtained by the leaching treatment can be controlled by bubbling the oxidant into the solution and adjusting the supply amount (air feed amount) thereof. Specifically, when the ORP of the leachate is excessively increased, the ORP can be reduced by reducing or stopping the supply amount of the oxidant. Conversely, when the ORP of the leachate decreases to the vicinity of a lower limit thereof, the ORP can be increased by increasing the supply amount of the oxidant.

An upper limit value of the ORP is not particularly limited, but is preferably 300 mV or less, and more preferably 280 mV or less. By setting the upper limit value of the ORP to such a range and controlling the ORP, it is possible to prevent the deposited copper sulfide from being excessively oxidized and redissolved, and it is possible to more effectively separate copper from nickel and/or cobalt.

### (Regarding Alloy)

A shape of the alloy to be treated is not particularly limited. Various shapes such as an alloy obtained by casting an alloy obtained by melting a discarded lithium ion battery into a plate shape and a powder such as alloy powder can be used. Among them, when the alloy to be treated is a powdery alloy (alloy powder), the leaching treatment can be more effectively and efficiently performed.

When a powdery alloy is used, a particle diameter thereof is preferably about 300 um or less. By setting an alloy having such a particle diameter as the object to be treated, the leaching treatment can be performed more effectively. On the other hand, in a case where the particle diameter of the alloy is excessively small, not only cost is required for preparation, but also dust generation or ignition is caused. Therefore, the particle diameter of the alloy is preferably about 10 um or more.

In the leaching treatment, the alloy to be treated is preferably pre-washed with a dilute acid in advance. Accordingly, the surface of the alloy can be subjected to an activation treatment, and the leaching reaction can be promoted.

From the viewpoint of the object to be treated, the decopperization residue obtained through the decopperization treatment in the cementation step S2 to be described later may be fed back to the leaching step S1 (dashed arrow (R) in FIG. 1), and the decopperization residue may be subjected to the leaching treatment with an acid together with the alloy. A small amount of alloy containing cobalt and/or nickel and copper remains in the decopperization residue to be fed back through the decopperization treatment in the cementation step S2. Therefore, by subjecting at least a part or all of the decopperization residue to the leaching treatment in the leaching step S1, a solution containing nickel and/or cobalt at a higher concentration can be efficiently obtained.

### (Regarding Acid)

As the acid (acid solution) used in the leaching treatment, acids such as sulfuric acid, hydrochloric acid, and nitric acid can be used. Among them, an acid containing sulfuric acid is preferably used as the acid in a case of a process for implementing "battery-to-battery", which is an ideal circulation method in which an alloy obtained by melting a discarded lithium ion battery (LIB) (discarded LIB) is used and the discarded LIB is recycled to be used again as a LIB material. By using sulfuric acid as the acid, a leachate can be obtained in the form of a sulfate which is easily used as a positive electrode material of the LIB.

As the acid, these acids may be used alone or in combination. Alternatively, a chloride may be contained in sulfuric acid and used as the acid.

An addition amount of the acid is not particularly limited, but is preferably 1 equivalent or more, and more preferably 1.2 equivalents or more, relative to a total amount of nickel and/or cobalt contained in the alloy to be treated and the decopperization residue. A reaction rate can be increased by increasing the addition amount of the acid, and a more efficient treatment can be performed. An upper limit value of the addition amount of the acid is preferably 11 equivalents or less.

In the leaching treatment, the alloy and the acid may be supplied to a device in which a plurality of mixing portions such as a thickener are coupled to one another, and the alloy and the acid may be brought into contact with each other stepwise in a countercurrent manner. For example, the alloy is supplied to the uppermost mixing portion of the device, the acid is supplied to the lowermost mixing portion of the device, and the alloy and the acid are brought into contact with each other in a countercurrent stepwise manner.

### (Regarding Sulfurizing Agent)

As the sulfurizing agent to be added together with the acid to coexist in the alloy, generally known sulfurizing agents such as sodium hydrosulfide and elemental sulfur can be used. For example, in the case of a solid sulfurizing agent, the sulfurizing agent is preferably appropriately pulverized so that the reaction easily proceeds. The sulfurizing agent used in the leaching treatment in the leaching step S1 and the sulfurizing agent used in the decopperization treatment in the cementation step S2 to be described later may be the same or different.

Regarding an amount of the sulfurizing agent, 1 equivalent thereof can be defined in accordance with the above reaction formula [1]. In this case, the amount of the sulfurizing agent is preferably 1 equivalent or more and 2 equivalents or less. When the amount of the sulfurizing agent is less than 1 equivalent, there is a possibility that the decopperization becomes incomplete. On the other hand, when an amount exceeding 2 equivalents is added, there is a concern that the unreacted sulfurizing agent may remain, which causes even a component to be separated as a solution such as nickel or cobalt to become a sulfide and unrecovered.

As described above, in the leaching treatment, the treatment is preferably performed while maintaining the ORP of the reaction solution at 50 mV or more, but the control on ORP at this time can also be performed by the control on addition of the sulfurizing agent. Therefore, regarding the amount of the sulfurizing agent, the addition of the sulfurizing agent is preferably performed so that the ORP of the reaction solution is 50 mV or more.

### (Regarding Treatment Conditions)

In the leaching treatment, it is preferable to measure the pH, the liquid temperature, and the like of the obtained leachate and monitor and control measured values.

With the metal of nickel and cobalt being dissolved in the acid by the leaching treatment, the pH increases as the acid is consumed. Therefore, it is preferable to perform the treatment while appropriately controlling the pH condition within a range in which the leaching reaction of valuable metals is promoted.

Specifically, the pH condition is not particularly limited, but the treatment is preferably performed by controlling the pH of the obtained leachate to be within a range of 0.8 or more and 1.6 or less. By performing the leaching treatment in such a range, the leaching is promoted, and a situation in which precipitated copper sulfide is excessively oxidized and redissolved can be more effectively suppressed.

The pH can be controlled by adjusting the addition amount of the acid. An indication of the addition amount of the acid until the reaction end point is preferably about 1.2 equivalents relative to the total amount of nickel and/or cobalt contained in the alloy.

In the leaching treatment, an appropriate range for conditions such as the reaction temperature, the treatment time, and the concentration of the slurry containing the alloy is preferably determined by performing a preliminary test. In the leaching treatment, the leachate may be bubbled with air or the like so that a uniform reaction proceeds. Further, in the leaching treatment, divalent copper ions may be added, and accordingly, the divalent copper ions serve as a catalyst to promote the leaching reaction.

### [Cementation Step]

In the cementation step (also referred to as "decopperization step" or "reduction step") S2, a reducing agent and a sulfurizing agent are added to the leachate obtained by the treatment in the leaching step S1, and a decopperization treatment (cementation treatment) of sulfurizing at least copper contained in the leachate (the following reaction formula [6]) is performed to obtain a post-decopperization solution (post-cementation solution) containing nickel and/or cobalt and a decopperization residue (cementation residue) containing copper sulfide. CuSO₄ + Ni-Cu + 2S⁰ ⇒ NiSO₄ + 2CuS [6]

In the leaching treatment in the leaching step S1, together with nickel and/or cobalt, copper contained in the alloy and the decopperization residue may leach by the acid and be dissolved in the solution, and a part of the copper may remain in the solution without reacting with the sulfurizing agent. In particular, in the method according to the present embodiment, the divalent copper ion source is added, and the leaching treatment is performed while maintaining the copper concentration in the reaction solution in a predetermined range.

Therefore, the cementation step S2 is provided, and copper contained in the obtained leachate is sulfurized (reduced) to generate and selectively separate the decopperization residue in which copper is a precipitate in the form of copper sulfide, thereby obtaining a post-decopperization solution (reduction solution) containing nickel and/or cobalt, that is, a solution not containing copper.

The reducing agent is not particularly limited, and a solid or liquid reducing agent can be used. For example, as the solid reducing agent, a metal less noble than copper can be used. Among them, it is preferable to use an alloy containing nickel and/or cobalt and to reduce copper by bringing the leachate into contact with the alloy as a reducing agent for the leachate.

In addition, as the alloy containing nickel and/or cobalt as the reducing agent, an alloy obtained by melting a discarded lithium ion battery can be used similarly to the object to be treated by the leaching treatment. In the first place, the alloy treatment method is to obtain a solution containing nickel and/or cobalt, and therefore, by using an alloy containing nickel and/or cobalt to be recovered (for example, alloy obtained by melting discarded lithium ion battery) as the reducing agent, an effect of leaching a portion of the alloy contributing to reduction is also obtained.

That is, the leachate to be subjected to the decopperization treatment in the cementation step S2 is an acid solution obtained by performing the leaching treatment by the acid such as sulfuric acid in the leaching step S1. Therefore, by using an alloy containing nickel and/or cobalt as the reducing agent, the alloy acts as a reducing agent for fixing copper contained in the leachate, while the alloy can be leached by the leachate, which is an acid solution, and nickel and/or cobalt can be dissolved in the post-decopperization solution (reduction solution).

In this manner, an alloy is used as the reducing agent, so that there is no need to separately prepare the reducing agent, which is industrially advantageous. In addition, a dissolution amount of nickel and/or cobalt can be increased, and a solution containing nickel and/or cobalt at a higher concentration can be obtained. A shape of the alloy is not particularly limited.

An amount (addition amount) of the alloy added as the reducing agent is not particularly limited, but is preferably in the range of 1.0 time or more and 2.0 times or less of the equivalent required for sulfurizing copper contained in the leachate to precipitate copper as copper sulfide. The "equivalent" herein can be defined in accordance with the reaction represented by the above reaction formula [5]. When the addition amount of the reducing agent is less than one time of the equivalent, there is a possibility that copper cannot be completely removed, and on the other hand, even when the addition amount exceeds two times of the equivalent, the reducing agent remains as an unreacted decopperization residue, and a load when the decopperization residue obtained as described later is fed back to the leaching step S1 is increased. As a result, there is a possibility of a bad cycle in which the copper concentration of the leachate increases.

As the sulfurizing agent, generally known sulfurizing agents such as sodium hydrosulfide and elemental sulfur, similarly to those used in the leaching treatment, can be used. The sulfide may be a solid, a liquid, or a gas (gas).

An amount (addition amount) of the sulfurizing agent may be set in total with the sulfurizing agent to be added in the leaching step S1, and can be set to the equivalent necessary for fixing, as copper sulfide, copper contained in the leachate and the alloy to be added as the reducing agent.

In the decopperization treatment, the treatment is preferably performed by monitoring the oxidation-reduction potential (ORP) and pH and appropriately controlling the addition amount of the reducing agent. For example, the treatment is preferably performed so that the pH of the post-decopperization solution obtained by the decopperization treatment is maintained at 1.6 or less as in the case of the leachate. In the decopperization treatment, an indication of an end point of decopperization can be managed by measuring the ORP. For example, a point at which the ORP is 0 mV or less in terms of a value with the silver/silver chloride electrode as a reference electrode can be used as the indication of the end point.

In the decopperization treatment, the liquid temperature is preferably controlled to 50°C or higher.

By performing the decopperization treatment as described above, a slurry containing a post-decopperization solution containing nickel and/or cobalt and a decopperization residue containing copper sulfide can be obtained, and by performing solid-liquid separation, it is possible to recover a post-decopperization solution from which copper is separated, that is, a solution containing nickel and/or cobalt. The recovered post-decopperization solution can be subjected to, for example, a deironization step (oxidation neutralization step) to be purified by removing impurities such as iron.

On the other hand, a small amount of the alloy containing nickel and/or cobalt and copper remains in the decopperization residue obtained by solid-liquid separation. The alloy remaining in the decopperization residue is derived from, for example, an alloy (alloy containing nickel and/or cobalt and copper) added as the reducing agent in the decopperization treatment in the cementation step S2. Alternatively, the alloy is derived from an unreacted alloy in the leaching treatment, which is a material for the leaching treatment. Therefore, at least a part or all of the decopperization residue obtained through the decopperization treatment may be fed back to the leaching step S1 (dashed arrow (R) in FIG. 1), and may be subjected to the leaching treatment together with an alloy as a new material for treatment. Accordingly, a solution containing nickel and/or cobalt at a high concentration can be more efficiently obtained.

### [Examples]

Hereinafter, examples of the present invention will be described more specifically, but the present invention is not limited to the following examples.

### (Leaching Step)

A discarded lithium ion battery (discarded LIB) was oxidized and roasted by heating under an oxidizing atmosphere, and thereafter, the obtained oxidized and roasted product was subjected to a pyrometallurgical treatment of adding a reducing agent to the product, followed by heating and melting, and reducing. An alloy in a molten state obtained by reduction and melting was solidified to obtain a powdery powder (alloy powder) having a particle diameter of 300 um or less. The obtained alloy powder was used as an alloy to be treated (alloy containing nickel and cobalt as well as copper). Table 1 below shows composition of the alloy powder analyzed using an ICP analyzer.

**[Table 1]**

| | Grade (mass%) | | | | |
|---|---|---|---|---|---|
| | Ni | Co | Cu | Fe | P |
| Alloy | 54 | 9 | 37 | 1.6 | 1 |

The alloy powder having the composition shown in Table 1 was used as a slurry having a slurry concentration of 100 g/L, and sulfur was added in an amount of 1.25 equivalents to the copper contained in the alloy powder and allowed to coexist, followed by adding a sulfuric acid solution and performing a leaching treatment. At this time, copper (II) sulfate (divalent copper ion source) was added so that a copper concentration in a reaction solution was 5 g/L.

A liquid temperature was 60°C. An end of a leaching reaction was visually determined. The leaching was completed in 6 hours. After the leaching treatment, the obtained slurry was subjected to solid-liquid separation by filtration, and a filtrate (leachate) was analyzed by an ICP analyzer to measure a concentration of each element component.

Table 2 below shows the concentration of each element in the leachate. As a result of elemental analysis, a leaching rate is 98% for both nickel (Ni) and cobalt (Co). In addition, nickel and cobalt can be efficiently leached in a short period of time. This is considered to be because divalent copper ions (copper sulfate) are added and the leaching treatment is performed, so that the copper acts as a catalyst for the leaching reaction.

**[Table 2]**

| | Concentration(g/L) | | | | |
|---|---|---|---|---|---|
| | Ni | Co | Cu | Fe | P |
| Leachate | 50 | 8 | 10 | 1.5 | 0.8 |

Since divalent copper ions are added in the leaching treatment, copper ions remain in the obtained leachate. However, it is presumed that the remaining copper ions can be separated and removed as copper sulfide by adding a sulfurizing agent and performing a decopperization treatment. In addition, it is presumed that the remaining copper ions can be easily separated and removed by using a known method such as electrowinning to obtain a leachate mainly containing nickel and cobalt.

In Comparative Example 1, a leaching treatment was performed under the same conditions as in Example 1 except that a divalent copper ion source was not added.

After the leaching treatment, the obtained slurry was subjected to solid-liquid separation by filtration, and the filtrate (leachate) was analyzed by an ICP analyzer to measure a concentration of each element component.

Table 3 below shows the concentration of each element in the leachate. As a result of elemental analysis, the leaching rate is 97% for both nickel (Ni) and cobalt (Co). A long period of time of 11 hours is required until the leaching reaction ends.

**[Table 3]**

| | Concentration(g/L) | | | | |
|---|---|---|---|---|---|
| | Ni | Co | Cu | Fe | P |
| Leachate | 49 | 8 | <0.01 | 1.4 | 0.8 |

In this manner, it is found based on the results of Comparative Example 1 that according to the method of Example 1 in which the divalent copper ion source is added and the leaching treatment is performed, the leaching of nickel and cobalt is promoted, and the treatment time can be greatly shortened.

An alloy powder having the same composition as that used in Example 1 and shown in Table 1 above was used as a slurry having a slurry concentration of 100 g/L, a predetermined amount of sulfur (sulfurizing agent) was added to the slurry and allowed to coexist, followed by adding a sulfuric acid solution thereto and performing a leaching treatment. At this time, copper (II) sulfate (divalent copper ion source) was added so that a copper concentration in a reaction solution was 5 g/L.

In addition, sulfur as a sulfurizing agent was added twice, that is, at the start of the treatment and after 20 minutes from the start of the treatment, and half of each predetermined amount was added in the form of a powder pulverized in a mortar, and the reaction solution was controlled and maintained at an oxidation-reduction potential (ORP, reference electrode: silver/silver chloride electrode) of 50 mV or more by the addition of sulfur as a sulfurizing agent.

A liquid temperature was 60°C. An end of a leaching reaction was visually determined. The leaching was completed in 6 hours. After the leaching treatment, the obtained slurry was subjected to solid-liquid separation by filtration, and a filtrate (leachate) was analyzed by an ICP analyzer to measure a concentration of each element component.

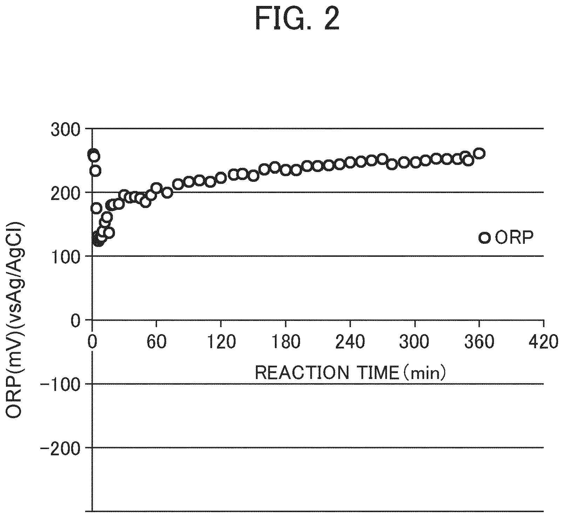

Table 4 below shows the concentration of each element in the leachate. FIG. 2 is a graph showing transition of ORP of the reaction solution with respect to the reaction time of the leaching reaction in Example 1.

As a result of elemental analysis, a leaching rate is 98% for both nickel (Ni) and cobalt (Co). In addition, nickel and cobalt can be efficiently leached in a short period of time. It is considered to be because by adding divalent copper ions (copper sulfate) and performing the leaching treatment while maintaining the ORP of the reaction solution at 50 mV or more, copper effectively acts as a catalyst for the leaching reaction.

**[Table 4]**

| | Concentration(g/L) | | | | |
|---|---|---|---|---|---|
| | Ni | Co | Cu | Fe | P |
| Leachate | 53 | 9 | 0.1 | 1.6 | 1 |

Since divalent copper ions are added in the leaching treatment as in Example 1, copper remains in the obtained leachate. However, the amount of remaining copper is about 0.1 g/L, which is significantly reduced as compared with Example 1. It is found from this result that by adding divalent copper ions and performing the leaching treatment so that the ORP of the reaction solution is 50 mV or more, the amount of copper remaining in the obtained leachate can be effectively reduced.

In Reference Example 1, the same alloy powder having the composition shown in Table 1 as that used in Example 2 was used to prepare a slurry having a slurry concentration of 200 g/L, and sulfur (sulfurizing agent) was added thereto and allowed to coexist, followed by adding a sulfuric acid solution and performing a leaching treatment.

At this time, copper (II) sulfate (divalent copper ion source) was added so that the copper concentration in the reaction solution became 5 g/L, and addition of a predetermined amount of sulfur as a sulfurizing agent was performed at the start of the treatment in a batch manner. Therefore, an oxidation-reduction potential (ORP, reference electrode: silver/silver chloride electrode) of the reaction solution rapidly became -150 mV at the start of the reaction.

After the leaching treatment, the obtained slurry was subjected to solid-liquid separation by filtration, and the filtrate (leachate) was analyzed by an ICP analyzer to measure a concentration of each element component.

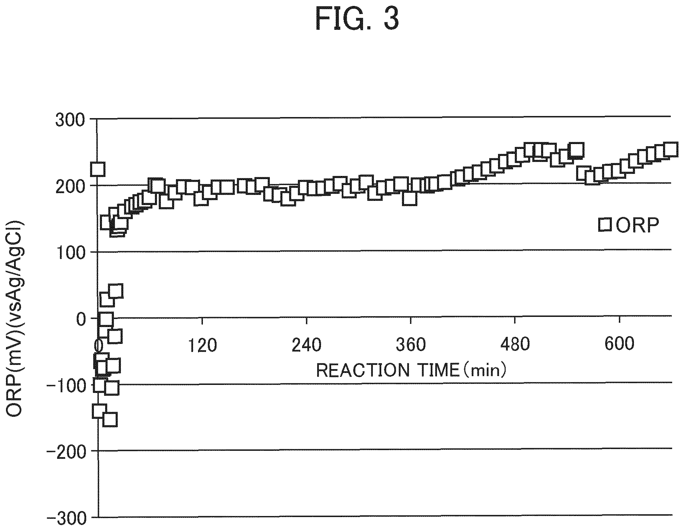

Table 5 below shows the concentration of each element in the leachate. FIG. 3 is a graph showing transition of ORP of the reaction solution with respect to the reaction time of the leaching reaction in Reference Example 1.

As a result of elemental analysis, the leaching rate was 97% for nickel (Ni) and 96% for cobalt (Co), and a long period of time of 11 hours was required for completion of the leaching reaction. This is considered to be because the sulfur as the sulfurizing agent is added in a batch manner in an initial stage of the reaction, so that the sulfur and the divalent copper ions rapidly react with each other, which causes the divalent copper ions to not be present in the reaction solution, and thus the effect of promoting leaching cannot be obtained. In addition, one of the factors is considered to be that sulfur and divalent copper ions directly react with each other when the ORP is less than 50 mV, and a hardly soluble copper sulfide film is formed on the alloy surface.

**[Table 5]**

| | Concentration (g/L) | | | | |
|---|---|---|---|---|---|
| | Ni | Co | Cu | Fe | P |
| Leachate | 52 | 9 | <0.01 | 1.5 | 1 |

In this manner, it is found based on the results of Reference Example 1 that according to the method of Example 2 in which the divalent copper ion source is added and the leaching treatment is performed while maintaining the ORP of the reaction solution at 50 mV or more, the leaching of nickel and cobalt can be promoted and the treatment time can be shortened.

## Claims

1. An alloy treatment method for obtaining a solution containing nickel and/or cobalt from an alloy containing nickel and/or cobalt and copper, the method comprising:
a leaching step of adding an acid solution to the alloy and performing a leaching treatment in a state where a sulfurizing agent coexists, thereby obtaining a leachate and a leached residue, wherein
in the leaching step, a divalent copper ion source is added and the leaching treatment is performed while maintaining a copper concentration in a reaction solution in a range of 0.5 g/L or more and 15 g/L or less.

2. The alloy treatment method according to claim 1, wherein in the leaching step, the leaching treatment is performed while maintaining the reaction solution at an oxidation-reduction potential of 50 mV or more in terms of a value using a silver/silver chloride electrode as a reference electrode.

3. The alloy treatment method according to claim 2, wherein the oxidation-reduction potential is 50 mV or more by controlling addition of the sulfurizing agent.

4. The alloy treatment method according to claim 1, further comprising: a cementation step of adding a reducing agent and a sulfurizing agent to the leachate obtained in the leaching step, and performing a decopperization treatment of sulfurizing at least copper contained in the leachate to obtain a post-decopperization solution and a decopperization residue.

5. The alloy treatment method according to claim 1, wherein a part of the leachate obtained in the leaching step is fed back to the leaching step as the acid solution.

6. The alloy treatment method according to claim 4, wherein copper contained in the decopperization residue obtained in the cementation step is added as the divalent copper ion source to be added in the leaching step.

7. The alloy treatment method according to any of claims 1 to 6, wherein the alloy includes an alloy obtained by melting a discarded lithium ion battery.
